(19) Europäisches Patentamt
European Patent Office
Office européen des brevets

(11) EP 3 390 499 B1

(12) **FASCICULE DE BREVET EUROPEEN**

(45) Date de publication et mention de la délivrance du brevet:
**05.02.2020 Bulletin 2020/06**

(21) Numéro de dépôt: **16825533.9**

(22) Date de dépôt: **16.12.2016**

(51) Int Cl.:
***C08J 3/20*** *(2006.01)* ***C08J 3/22*** *(2006.01)*
***C08K 5/00*** *(2006.01)*

(86) Numéro de dépôt international:
**PCT/FR2016/053491**

(87) Numéro de publication internationale:
**WO 2017/103519 (22.06.2017 Gazette 2017/25)**

(54) **PROCÉDÉ DE PRÉPARATION D'UN MÉLANGE MAÎTRE, COMPRENANT UN ÉLASTOMÈRE DIÉNIQUE, UNE CHARGE ORGANIQUE RENFORÇANTE, ET ÉVENTUELLEMENT UN AGENT ANTIOXYDANT**

VERFAHREN ZUR HERSTELLUNG EINES MASTERBATCHES ENTHALTEND EIN DIENISCHES ELASTOMER, EIN ORGANISCHER VERSTÄRKENDER FÜLLSTOFF UND EVENTUELL EIN ANTOXIDANS

PROCESS FOR THE PREPARATION OF A MASTER-BATCH COMPRISING A DIENIC ELASTOMER, AN ORGANIC REINFORCING FILLER AND POSSIBLY AN ANTIOXIDANT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2015 FR 1562512**

(43) Date de publication de la demande:
**24.10.2018 Bulletin 2018/43**

(73) Titulaire: **Compagnie Générale des Etablissements Michelin**
**63000 Clermont-Ferrand (FR)**

(72) Inventeurs:
- **KANAAN, Charbel**
  **63040 Clermont-Ferrand Cedex 9 (FR)**
- **GROSZ, Ron**
  **Andover, MA 01810 (US)**

(74) Mandataire: **Bocchi, Brigitte**
**Manufacture Française des Pneumatiques Michelin**
**CBS/CORP/J/PI - F35 - Ladoux**
**23, place des Carmes - Déchaux**
**63040 Clermont-Ferrand Cedex 9 (FR)**

(56) Documents cités:
**WO-A1-2013/087657 CA-A1- 2 920 409**
**FR-A1- 2 964 661 US-A- 6 048 923**

- **OTTO S ET AL: "New reference value for the description of filler dispersion with the dispergrader 1000 NT", KAUTSCHUK UND GUMMI - KUNSTSTOFFE, HUTHIG VERLAG, HEIDELBERG, DE, vol. 58, no. 7-8, 1 juillet 2005 (2005-07-01), pages 390-393, XP008143375, ISSN: 0948-3276**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 390 499 B1

## Description

La présente invention vise à améliorer le rendement industriel des procédés de préparation de mélanges maître comprenant un élastomère diénique et une charge organique renforçante finement dispersée dans la matrice élastomérique.

On entend par « mélange maître » (couramment désigné par son nom anglais « masterbatch ») : un composite à base d'élastomère dans lequel a été introduite une charge et éventuellement d'autres additifs. Dans le cadre de la présente invention, l'élastomère comprend du caoutchouc naturel.

Selon l'invention, le mélange-maître est particulièrement utilisé pour la fabrication de compositions de caoutchoucs diéniques renforcées, destinées à la fabrication de pneumatiques ou de produits semi-finis pour pneumatiques, en particulier de bandes de roulement de ces pneumatiques.

Pour obtenir les propriétés de renforcement et d'hystérèse optimales conférées par une charge dans une bande de roulement de pneumatique et ainsi une haute résistance à l'usure et une basse résistance au roulement, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

Il existe différentes méthodes pour obtenir un mélange maître d'élastomère diénique et de charge renforçante. En particulier un type de solution consiste, pour améliorer la dispersiblité de la charge dans la matrice élastomérique, à procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une charge dispersée dans de l'eau, couramment appelée « slurry ». Certains procédés en particulier, tels que ceux décrits dans le document US 6 048 923, permettent d'obtenir un mélange maître d'élastomère et de charge présentant une très bonne dispersion de la charge dans la matrice élastomérique, très améliorée par rapport à la dispersion de la charge dans la matrice élastomérique susceptible d'être obtenue lors du mélange en phase solide d'élastomère et de charge renforçante. Ce procédé consiste notamment à incorporer un flux continu d'un premier fluide constitué par un latex d'élastomère dans la zone de mélangeage d'un réacteur de coagulation, à incorporer un deuxième flux continu d'un deuxième fluide constitué par une dispersion aqueuse de charge sous pression dans la zone de mélangeage pour former un mélange avec le latex d'élastomère ; le mélangeage de ces deux fluides étant suffisamment énergétique pour permettre de coaguler quasiment complètement le latex d'élastomère avec la charge avant l'orifice de sortie du réacteur de coagulation puis à sécher le coagulum obtenu.

Le coagulum est usuellement séché pour produire un mélange maître par un procédé en continu comprenant les étapes successives suivantes :

- Essorage (en anglais de-watering), le plus souvent dans une extrudeuse. Le produit essoré est usuellement dénommé « pellet » pour désigner les granules de coagulum. Le taux de matières volatiles, essentiellement de l'eau, est usuellement de 10% à 20% en poids.
- Séchage, mélange et plastification (en anglais « masticate ») dans un mélangeur continu, le plus souvent un mélangeur Banbury ou un mélangeur Unimix Continuous Mixer commercialisé par Farrel Corporation (ce mélangeur est aussi désigné sous l'abbréviation « FCM »). Lors de cette étape le mélange est mastiqué et chauffé. C'est lors de cette étape que sont ajoutés les divers additifs éventuels, et en particulier l'agent antioxydant qui est un additif considéré comme étant nécessaire. Le produit récupéré en sortie est usuellement dénommé « chunk » pour désigner la masse récupérée. Cette masse est usuellement à une température allant de 140°C à 200°C. Le taux de matières volatiles, essentiellement de l'eau, est usuellement de 1% à 3% en poids En présence de caoutchouc naturel dans la matrice élastomérique, cette masse a une viscosité Mooney très élevée (ainsi pour des taux de noir de carbone supérieurs à 65 phr, la viscosité Mooney est au-dessus des capacités de mesure des appareils, soit supérieure à 200 UM ; on peut parler d' « overtoque ») et est donc très difficile à travailler à un débit compatible avec une fabrication à l'échelle industrielle. Ainsi, dans la pratique, pour des taux de noir de carbone supérieurs à 65phr, en sortie du mélangeur une partie de la masse est envoyée aux outils à cylindre (et ainsi le débit est divisé par deux), le reste est habituellement jeté. Le reste peut représenter une quantité significative, pouvant par exemple correspondre à la moitié de la production sortant du mélangeur.
- plastification par passage d'une partie de la masse récupérée en sortie du mélangeur continu dans des outils à cylindre (en anglais Roll Mill). Ces outils à cylindre sont en contact avec l'air ambient. A la sortie des outils à cylindre, le ruban (en anglais « strip ») a usuellement une température allant de 110°C à 160°C et un taux de matières volatiles inférieur à 1% en poids.
- Fin de ligne pouvant notamment comprendre des étapes de granulation, compactage sous forme de balles, ...
- Eventuellement stockage.

Ainsi, les procédés actuels ne sont pas économiques en raison d'une perte significative (par exemple de près de la moitié) de la production entre les étapes de mélangeage continu et de plastification due à la trop grande viscosité Mooney du produit lorsque la matrice élastomérique comprend du caoutchouc naturel.

Une photo d'une production d'un mélange maître lors de son passage sur les outils à cylindre, à un débit de 375 kg/h, est donnée figure 1. On constate que la nappe est fortement fissurée et que le ruban qui est obtenu n'est pas homogène avec des déchirures sur les bords et difficile à travailler (on observe que le ruban a tendance à vriller).

D'une manière surprenante, il a été constaté qu'il était possible d'augmenter le débit de l'étape de plastification, qui peut être identique au débit des étapes d'essorage et de mélangeage. Autrement dit, il a été constaté qu'il était possible d'envoyer la totalité de la masse sortant du mélangeur continu au(x) outil(s) à cylindre.

De manière fortuite et inattendue, les inventeurs ont en effet constaté que lorsque l'agent antioxydant est omis ou lorsque la totalité de l'agent antioxydant présent dans le mélange maître obtenu en fin de procédé est introduit non plus dans le mélangeur continu mais après les outils à cylindre alors il est possible d'augmenter le débit de l'étape de plastification, qui peut être identique au débit des étapes d'essorage et de mélangeage. Ainsi, la totalité de la masse sortant du mélangeur continu peut être plastifiée lors de la production.

L'invention a ainsi pour objet un procédé de préparation d'un mélange maître, comprenant un élastomère diénique, une charge renforçante et présentant une dispersion de la charge renforçante dans la matrice élastomérique ayant une note Z supérieure ou égale à 80, l'élastomère diénique comprend au moins du caoutchouc naturel, le procédé comprend les étapes successives suivantes :

a) Introduire, pour obtenir un mélange maître sous forme de masse séchée, un coagulum dans au moins un mélangeur continu, ledit coagulum comprend ledit élastomère diénique et ladite charge renforçante dispersée avec une note Z supérieure ou égale à 80 dans la masse séchée ;
b) Faire passer la masse sortant du mélangeur continu dans un outil à cylindre pour obtenir un mélange maître sous forme de ruban ; puis
c) Eventuellement, introduire le ruban en sortie de l'outil à cylindre et un agent antioxydant dans un mélangeur continu de sorte à obtenir un mélange maître comprenant un agent antioxydant ;
d) Récupérer suite à l'étape b) ou c) ledit mélange maître ayant un taux d'humidité inférieur à 1% en poids

caractérisé en ce que les débits des étapes a) et b) sont supérieurs à 500 kg/h,
et en ce que lorsqu'un agent antioxydant est présent dans le mélange maître obtenu à la fin de l'étape d), la totalité dudit agent antioxydant est introduit lors de l'étape c).

Avantageusement, la totalité de la masse sortant du mélangeur continu de l'étape a) est envoyé à l'outil à cylindre de l'étape b).

Le mélange maître présente avantageusement une dispersion de la charge renforçante dans la matrice élastomérique ayant une note Z supérieure ou égale à 90.

Préalablement à l'étape a) le coagulum est avantageusement obtenu par mélangeage en phase liquide à partir d'un latex de l'élastomère diénique et d'une dispersion aqueuse de la charge renforçante. En particulier, il est obtenu selon les étapes suivantes :

- Alimenter un flux continu du latex de l'élastomère diénique jusqu'à une zone de mélange d'un réacteur de coagulation définissant une zone allongée de coagulation s'étendant entre la zone de mélange et une sortie,
- Alimenter un flux continu d'un fluide comprenant une charge renforçante sous pression dans la zone de mélange d'un réacteur de coagulation pour former un mélange coagulé,
- Essorer le coagulum obtenu précédemment afin de récupérer le coagulum essoré de l'étape a).

Dans une première variante, le mélange maître obtenu à la fin de l'étape d) ne comprend pas d'agent antioxydant. Dans cette variante, l'étape c) est omise et le mélange maître obtenu à la fin de l'étape d) ne comprend pas d'agent antioxydant.

Dans une deuxième variante, l'étape c) est réalisée, le mélange maître obtenu à la fin de l'étape d) comprend un agent antioxydant et la totalité dudit agent antioxydant est introduit lors de l'étape c).

La charge renforçante est avantageusement un noir de carbone. Le taux de noir de carbone est avantageusement compris entre 40 et 90 pce, de préférence entre 45 et 80 pce.

L'élastomère diénique est avantageusement un caoutchouc naturel.

L'agent antioxydant peut être une N-alkyl-N'-phényl-paraphényldiamine répondant à la formule (I) :

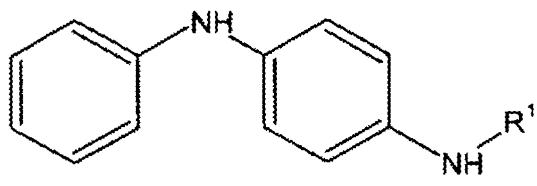

(I)

dans laquelle $R^1$ représente un groupe alkyle, linéaire ou ramifié, ayant de 1 à 12 atomes de carbone ou un groupe cycloalkyle ayant de 5 à 8 atomes de carbone.

L'invention a également pour objet un procédé de préparation d'une composition de caoutchouc comprenant les étapes suivantes :

(A) Préparation d'un mélange maître comprenant un élastomère diénique, une charge renforçante par le procédé selon l'invention ;
(B) Malaxage thermo-mécanique à haute température du mélange maître obtenu suite à l'étape (A) avec les autres constituants de la composition de caoutchouc, à l'exception du système de vulcanisation ;
(C) Travail mécanique à une température inférieure à la température de l'étape (B) du produit issu de l'étape (B) et incorporation du système de vulcanisation.

## I- **MESURES ET TESTS**

Les compositions de caoutchouc sont caractérisées, avant et après cuisson, comme indiqué ci-après.

### Plasticité Mooney

On utilise un consistomètre oscillant tel que décrit dans la norme française NF T 43-005 35 (1991). La mesure de plasticité Mooney se fait selon le principe suivant : la composition à l'état cru (i.e., avant cuisson) est moulée dans une enceinte cylindrique chauffée à 115°C. Après 5 minutes de préchauffage, le rotor (de petite taille) tourne au sein de l'éprouvette à 0,04 tours/minute et on mesure le couple utile pour entretenir ce mouvement après 10 minutes de rotation. La plasticité Mooney MS(5+10) est exprimée en "unité Mooney" (UM, avec 1 UM = 0,83 Newton.mètre). Lorsque la viscosité est trop élevée, le rotor n'arrive pas à tourner et on ne peut pas mesurer de couple.

### Dispersion

D'une manière connue, la dispersion de charge dans une matrice élastomérique peut être représentée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\text{\% surface non dispersée}) / 0.35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.

Plus est la note Z haute, meilleure est la dispersion de la charge dans la matrice élastomérique (une note Z de 100 correspondant à une dispersion parfaite et une note Z de 0 à une dispersion médiocre). On considèrera qu'une note Z supérieure ou égale à 80 correspond à une surface présentant une très bonne dispersion de la charge dans la matrice élastomérique.

### Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 100% d'allongement (notés MA100). Les mesures de traction pour déterminer les modules accommodés sécants sont effectuées à la température de 23°C +/-2°C, et dans les conditions normales d'hygrométrie (50 +/- 5% d'humidité relative).

### Déchirabilité

Les indices de déchirabilité sont mesurés à 100°C. On détermine notamment la force à exercer pour obtenir la rupture (FRD, en Mpa) sur une éprouvette de dimensions 10 x 105 x 2,5 mm entaillée au centre de sa longueur sur une profondeur de 5 mm, pour provoquer la rupture de l'éprouvette.

### Propriétés dynamiques

Les propriétés dynamiques et notamment tan($\delta$)max, représentative de l'hystérèse, sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 100% crête-crête (cycle aller), puis de 100% à 0,1% crête-crête (cycle retour). Les résultats exploités sont le module complexe de cisaillement dynamique (G*) et le facteur de perte tan($\delta$). Pour le cycle retour, on indique la valeur maximale de tan($\delta$) observée, noté tan($\delta$)max.

Fatigue MFTR : Test "MFTRA":

La résistance à la fatigue, exprimée en nombre de cycles ou en unités relatives (u.r.), est mesurée de manière connue sur une éprouvette non-entaillée soumise à des tractions répétées de faible fréquence jusqu'à un allongement de 20%, à l'aide d'un appareil Monsanto (type "MFTR"), jusqu'à rupture de l'éprouvette, selon la norme française NF T46-021.

## II. BREVE DESCRIPTION DES FIGURES

La figure 1 est une photographie d'un mélange-maître, non conforme à l'invention, lors de son passage sur les outils à cylindre.

La figure 2 est une photographie d'un mélange-maître, conforme à l'invention, lors de son passage sur les outils à cylindre.

## III. DESCRIPTION DETAILLEE DE L'INVENTION

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).
« pce » signifie « parties en poids pour cent parties d'élastomère ».

III-1) Procédé de préparation d'un mélange maître

Le procédé selon l'invention comprend les étapes successives suivantes :

a) Introduire, pour obtenir un mélange maître sous forme de masse séchée, un coagulum dans au moins un mélangeur continu ledit coagulum comprend ledit élastomère diénique et ladite charge renforçante dispersée avec une note Z supérieure ou égale à 80;

b) Faire passer la masse sortant du mélangeur continu dans un outil à cylindre pour obtenir un mélange maître sous forme de ruban ; puis

c) Eventuellement, introduire le ruban en sortie de l'outil à cylindre et un agent antioxydant dans un mélangeur continu de sorte à obtenir un mélange maître comprenant un agent antioxydant ;

d) Récupérer suite à l'étape b) ou c) ledit mélange maître ayant un taux d'humidité inférieur à 1% en poids

caractérisé en ce que les débits des étapes a) et b) sont supérieurs à 500 kg/h,
et en ce que lorsqu'un agent antioxydant est présent dans le mélange maître obtenu à la fin de l'étape d), la totalité dudit agent antioxydant est introduit lors de l'étape c).

Le procédé selon l'invention permet que lors de l'étape b) la totalité de la masse sortant du mélangeur continu est envoyé audit outil à cylindre. Ainsi, par rapport aux procédés de l'art antérieur, des économies significatives sont possibles.

Les débits des étapes a) et b) sont supérieurs à 500 kg/h, avantageusement supérieures à 600 kg/h, par exemple allant de 600 kg/h à 1300 kg/h. Le procédé étant un procédé en continu et la totalité de la masse sortant du mélangeur continu étant envoyée à l'outil à cylindre de l'étape b), les débits des étapes a) et b) sont avantageusement identiques. Par « débits identiques », on entend, au sens de la présente invention, des débits ne dépassant pas les 10% de pertes.

A l'étape a), le coagulum présente avantageusement une dispersion de la charge renforçante dans la matrice élastomérique ayant une note Z supérieure ou égale à 90. Le mélange maître obtenu à la fin du procédé conserve cette très bonne dispersion. Cette étape a) permet le séchage, mélange avec les éventuels additifs introduits dans le mélangeur, et plastification pour obtenir un mélange maître sous forme de masse séchée. Les additifs éventuellement ajoutés ne comprennent pas d'agent antioxydant.

Préalablement à l'étape a) le coagulum est avantageusement obtenu par mélangeage en phase liquide à partir d'un latex de l'élastomère diénique et d'une dispersion aqueuse de la charge renforçante.

En particulier, le coagulum est obtenu selon les étapes suivantes :

- Alimenter un flux continu du latex de l'élastomère diénique jusqu'à une zone de mélange d'un réacteur de coagulation définissant une zone allongée de coagulation s'étendant entre la zone de mélange et une sortie,
- Alimenter un flux continu d'un fluide comprenant une charge renforçante sous pression dans la zone de mélange d'un réacteur de coagulation pour former un mélange coagulé,
- Essorer le coagulum obtenu précédemment afin de récupérer le coagulum essoré de l'étape a).

Le coagulum introduit lors de l'étape a) se présente avantageusement sous la forme de granules.

Le coagulum introduit lors de l'étape a) a avantageusement été essoré jusqu'à un taux de matières volatiles allant de 8% à 20% en poids, usuellement environ 15% en poids. Les matières volatiles sont essentiellement de l'eau.

Le coagulum est avantageusement introduit lors de l'étape a) à un débit supérieur à 500 kg/h, plus avantageusement supérieur à 600 kg/h, encore plus avantageusement allant de 600 kg/h à 1300kg/h.

Lors de l'étape a) le mélangeur continu est avantageusement un FCM. Classiquement, en sortie du mélangeur continu de l'étape a), ou du dernier mélangeur continu lorsque plusieurs mélangeurs sont utilisés, la masse est à une température comprise entre 140°C et 200°C.

En sortie du mélangeur continu de l'étape a), ou du dernier mélangeur continu lorsque plusieurs mélangeurs sont utilisés, la masse a avantageusement un taux de matière volatile inférieur à 5% en poids.

Souvent, dès lors que le taux de charge renforçante est de 65 phr ou plus, en sortie du mélangeur continu de l'étape a), ou du dernier mélangeur continu lorsque plusieurs mélangeurs sont utilisés, la masse a une viscosité Mooney supérieure à 200 UM pour un taux de noir supérieure ou égale à 65 phr. C'est-à-dire que la masse a une viscosité Mooney tellement élevée qu'elle ne peut pas être mesurée.

L'étape b) permet une plastification de la masse séchée obtenue suite à l'étape a).

Le débit de l'étape b) est avantageusement supérieur à 500 kg/h, plus avantageusement supérieur à 600 kg/h, encore plus avantageusement allant de 600 kg/h à 1300 kg/h.

Lors de l'étape b), la totalité de la masse en sortie du mélangeur continu de l'étape a), ou du dernier mélangeur continu lorsque plusieurs mélangeurs sont utilisés, est envoyée vers le ou les outils à cylindre.

Suite à la plastification, on récupère un ruban.

Ce ruban, en sortie de l'étape b), est avantageusement à une température comprise entre 110°C et 160°C.

Ce ruban, en sortie de l'étape b), a avantageusement un taux de matière volatile inférieur à 1% en poids, généralement de 0,3% à 0,5% en poids.

Le débit de l'étape b) est avantageusement supérieur à 500 kg/h, plus avantageusement supérieur à 600 kg/h, encore plus avantageusement allant de 600 kg/h à 1300 kg/h.

Suite à ces étapes le ruban, en sortie de l'outil à cylindre, peut être introduit dans un mélangeur continu pour y ajouter un agent antioxydant. Lorsque le mélange maître obtenu en fin de procédé comprend un agent antioxydant, c'est au cours de cette étape seulement que va être ajoutée la totalité dudit agent antioxydant. On peut utiliser tout type de mélangeur continu, les extrudeuses étant par exemple bien adaptées.

Lorsqu'aucun agent antioxydant n'est ajouté, le ruban, en sortie de l'outil à cylindre, peut être envoyé directement en fin de ligne.

Dans une variante, l'étape c) est omise et le mélange maître obtenu à la fin de l'étape d) ne comprend pas d'agent antioxydant. Dans cette variante, le ruban récupéré en fin de l'étape b) peut être envoyé directement en fin de ligne, c'est-à-dire à l'étape d).

Dans cette variante, le procédé selon l'invention comprend les étapes suivantes :

a) Introduire, pour obtenir un mélange maître sous forme de masse séchée, un coagulum dans au moins un mélangeur continu ledit coagulum comprend ledit élastomère diénique et ladite charge renforçante dispersée avec une note Z supérieure ou égale à 80;

b) Faire passer la masse sortant du mélangeur continu dans un outil à cylindre pour obtenir un mélange maître sous forme de ruban ; puis

d) Récupérer suite à l'étape b) ledit mélange maître ayant un taux d'humidité inférieur à 1% en poids

caractérisé en ce que les débits des étapes a) et b) sont supérieurs à 500 kg/h,
et en ce que le mélange maître obtenu lors de l'étape d) ne comprend pas d'agent antioxydant.

Dans une autre variante, l'étape c) est réalisée, le mélange maître obtenu à la fin de l'étape d) comprend un agent antioxydant et la totalité dudit agent antioxydant est introduite lors de l'étape c).

D'autres additifs peuvent être ajoutés. Ils sont préférentiellement ajoutés lors de l'étape a) mais ils peuvent également être ajoutés lors de l'étape c) ou d'une autre étape d'introduction du ruban en sortie de l'outil à cylindre dans un mélangeur continu lorsqu'aucun agent antioxydant n'est introduit dans ce procédé. A titre d'exemple de ces autres additifs, on peut par exemple citer des charges (qui peuvent être identiques ou différentes des charges déjà présentes dans le coagulum ; à titre d'exemple de charge on peut citer l'oxyde de zinc), d'autres élastomères diéniques qui répondent aux définitions données ci-après, d'autre mélange-maître ou un complément de mélange-maître à condition qu'ils ne contiennent pas d'agent antioxydant s'ils sont ajoutés lors de l'étape a), des plastifiants, des agents d'aide à la mise en œuvre (par exemple acide stéarique, polymères liquides, huile, cires hydrocarbonées), des résines, des agents retardateur de flammes, des huiles d'extension, des lubrifiants, des stabilisants (tel que le sulfate d'hydroxylamine), et leurs mélanges.

Une photo d'une production d'un mélange maître selon l'invention lors de son passage sur les rouleaux de l'outil à cylindre, à un débit de 700 kg/h, est donnée figure 2. On constate que la nappe est peu déchirée et que le ruban obtenu est homogène (pas de déchirure sur les bords) et facile à travailler (absence de vrilles).

Par le procédé selon l'invention il est possible d'abaisser la viscosité Mooney du mélange sans dégrader ses propriétés. Cela permet d'améliorer significativement la processabilité du mélange sur les rouleaux de l'outil à cylindre et de ce fait d'augmenter le débit sur ce(s) outil(s) à cylindre.

III-2) Elastomère diénique

De façon usuelle, on utilise indifféremment dans le texte les termes « élastomère » et «caoutchouc » qui sont interchangeables.

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM 20 n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Parmi ces élastomères diéniques, on distingue par ailleurs le caoutchouc naturel et les élastomères synthétiques.

Par élastomères diéniques synthétiques susceptible d'être utilisé conformément à l'invention, on entend plus particulièrement par élastomère diénique:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4- hexadiène. A titre de composés vinylaromatiques conviennent par exemple le styrène, l'ortho-, méta-, para-méthylstyrène, le mélange commercial "vinyle-toluène", le paratertiobutylstyrène, les méthoxystyrènes, les chlorostyrènes, le vinylmésitylène, le divinylbenzène, le vinylnaphtalène. Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une température de transition vitreuse Tg (Tg, mesurée selon ASTM D3418) comprise entre 0°C et -70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus 10 particulièrement entre 20%

et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -5°C et - 70°C.

En résumé, le ou les élastomères diéniques synthétiques selon l'invention sont choisis préférentiellement dans le groupe des élastomères diéniques fortement insaturés constitué par les polybutadiènes (en abrégé "BR"), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène- butadiène (BIR), les copolymères d'isoprène-styrène (SIR) et les copolymères d'isoprène-butadiène-styrène (SBIR).

Comme il a été précisé plus haut, les procédés de mélangeage en phase liquide sont préférentiellement utilisés pour permettre d'obtenir des mélanges maîtres à base d'élastomère diénique et de charge renforçante présentant une très bonne dispersion de la charge renforçante dans l'élastomère. Ainsi notamment pour la réalisation du mélange maître d'élastomère diénique et de charge renforçante, on utilisera plus particulièrement un latex d'élastomère diénique, le latex d'élastomère étant une forme particulière de l'élastomère qui se présente sous forme de particules d'élastomère dispersées dans l'eau. L'invention concerne donc préférentiellement les latex d'élastomères diéniques, les élastomères diéniques étant ceux définis précédemment.

Plus particulièrement, pour le caoutchouc naturel (NR) qui compose tout ou partie de l'élastomère selon l'invention, ce caoutchouc naturel existe sous différentes formes comme le détail le chapitre 3 « Latex concentrates : properties and composition », de K.F. Gaseley, A.D.T. Gordon et T.D. Pendle dans «Naturel Rubber Science and Technology », A.D. Roberts, Oxford University Press - 1988. En particulier plusieurs formes de latex de caoutchouc naturel sont commercialisés : les latex de caoutchouc naturel dits « de champ » (« field latex »), les latex de caoutchouc naturel dits « concentrés » (« concentrated natural rubber latex »), les latex epoxydés (« ENR »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite: « HA » (high ammonia) et de qualité dite « LA » ; on utilisera avantageusement pour l'invention des latex de caoutchouc naturel concentrés de qualité HA. Le latex de NR peut être préalablement modifié physiquement ou chimiquement (centrifugation, traitement enzymatique, modifiant chimique...) Le latex peut être utilisé directement ou être préalablement dilué dans de l'eau pour faciliter sa mise en œuvre.

On notera que l'on peut envisager d'utiliser un ou plusieurs latex de caoutchouc naturel en coupage, ou un coupage d'un ou plusieurs latex de caoutchouc naturel avec un ou plusieurs latex de caoutchouc synthétique.

Ainsi à titre de latex d'élastomère synthétique, le latex peut notamment consister en un élastomère diénique synthétique déjà disponible sous forme d'émulsion (par exemple un copolymère de butadiène et de styrène, SBR, préparé en émulsion), ou en un élastomère diénique synthétique initialement en solution (par exemple un SBR préparé en solution) qui est émulsifié dans un mélange de solvant organique et d'eau, généralement au moyen d'un agent tensio-actif.

Convient particulièrement à l'invention un latex de SBR, notamment un SBR préparé en émulsion ("ESBR") ou un SBR préparé en solution ("SSBR"), et plus particulièrement un SBR préparé en émulsion. Il existe deux grands types de procédés de copolymérisation en émulsion du styrène et de butadiène, l'un d'entre eux, ou procédé à chaud (mis en œuvre à une température proche de 50° C), étant adapté pour la préparation de SBR très ramifiés alors que l'autre, ou procédé à froid (mis en œuvre à une température pouvant aller de 15° C à 40° C), permet d'obtenir des SBR plus linéaires. Pour une description détaillée de l'efficacité de plusieurs émulsifiants utilisables dans ledit procédé à chaud (en fonction des taux desdits émulsifiants), on pourra par exemple se reporter aux deux articles de C. W. Carr, 1. M. Kolthoff, E. J. Meehan, University of Minesota, Minneapolis, Minesota qui ont paru dans Journal of Polymer Science de 1950, Vol. V, n°2, pp. 201-206, et de 1951, Vol. VI, n° 1, pp. 73-81. Concernant des exemples comparatifs de mise en œuvre dudit procédé à froid, on pourra par exemple se reporter à l'article ½ Industrial and Engineering Chemistry, 1948, Vol. 5 40, n° 5, pp. 932-937, E. J. Vandenberg, G. E. Hulse, Hercules Powder Company, Wilmington, Delaware + et à l'article ½ Industrial and Engineering Chemistry, 1954, Vol. 46, n° 5, pp. 1065-1073, J. R. Miller, H. E. Diem, B. F. Goodrich Chemical Co., Akron, Ohio.

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%,

une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

III-3) Charge renforçante

La charge renforçante est avantageusement une charge organique renforçante, une charge inorganique renforçante ou un coupage charge organique renforçante - charge inorganique renforçante.

La charge renforçante comprend avantageusement une charge organique renforçante. Comme charge organique renforçante conviennent tous les noirs de carbone. Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N400, N660, N683, N772, N990). A titre de noir de carbone, conviennent également les noirs de carbone partiellement ou intégralement recouverts de silice par un post traitement, ou les noirs de carbone modifiés *in situ* par de la silice tels que, à titre non limitatif, les charges commercialisées par la société Cabot Corporation sous la dénomination EcoblackTM « CRX 2000 » ou « CRX4000 ».

Dans une variante préférée, la charge renforçante est une charge organique renforçante.

On pourra également envisager d'utiliser, à titre de charge renforçante, une charge inorganique renforçante. Cette charge inorganique renforçante pourra être utilisée seule ou en coupage avec la charge organique renforçante.

Par "charge inorganique", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("non-black filler") par opposition au noir de carbone, cette charge inorganique étant capable de renforcer à elle seule, sans autre moyen qu'un éventuel agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (-OH), à sa surface, pouvant nécessiter pour être utilisée à titre de charge renforçante l'emploi d'un agent ou système de couplage destiné à assurer une liaison chimique stable entre l'élastomère isoprénique et ladite charge. Une telle charge inorganique peut donc être utilisée seule ou avec un agent de couplage pour permettre le renforcement de la composition de caoutchouc dans laquelle elle est comprise. L'état physique sous lequel se présente la charge inorganique est indifférent, que ce soit sous forme de poudre, de microperles, de granulés, de billes ou toute autre forme densifiée appropriée. Bien entendu on entend également par charge inorganique des mélanges de différentes charges inorganiques, en particulier de charges siliceuses et/ou alumineuses hautement dispersibles telles que décrites ci-après. Comme charges inorganiques conviennent notamment des charges minérales du type siliceuse, en particulier de la silice ($SiO_2$), ou du type alumineuse, en particulier de l'alumine ($Al_2O_3$). La silice utilisée peut être toute silice connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites "HDS"), on citera par exemple les silices Ultrasil 7000 et Ultrasil 7005 de la société Evonik, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/016387.

Lorsque les compositions de l'invention sont destinées à des bandes de roulement de pneumatique à faible résistance au roulement, la charge inorganique utilisée, en particulier s'il s'agit de silice, a de préférence une surface BET comprise entre 45 et 400 $m^2/g$, plus préférentiellement comprise entre 60 et 300 $m^2/g$. De manière préférentielle, conviennent particulièrement pour la présente invention les charges inorganiques dont la taille moyenne (en masse) est comprise entre 20 et 300 nm, plus préférentiellement entre 20 et 150 nm. Cette taille moyenne est mesurée de manière classique après dispersion, par désagglomération aux ultrasons, de la charge à analyser dans l'eau ou une solution aqueuse contenant un agent tensioactif. Pour une charge inorganique telle que silice, la mesure est réalisée au moyen d'un sédimentomètre centrifuge à détection rayons X type "XDC" ("X-rays Disk Centrifuge"), commercialisé par la société Brookhaven Instruments, selon le mode opératoire qui suit. On réalise une suspension de 3,2 g d'échantillon de charge inorganique à analyser dans 40 ml d'eau, par action durant 8 minutes, à 60% de puissance (60% de la position maxi du "output control"), d'une sonde ultrasons de 1500 W (sonificateur Vibracell 3/4 pouce 10 commercialisé par la société Bioblock); après sonification, on introduit 15 ml de la suspension dans le disque en rotation à une vitesse variant entre 3000 et 6000 tours par minute (la vitesse étant adaptée en fonction de la taille moyenne de la charge : plus la taille est petite, plus la vitesse est élevée) ; après sédimentation pendant 120 minutes, la distribution en masse des tailles de particules et la taille moyenne en masse des particules dw sont calculées par le logiciel du sédimentomètre

"XDC" (dw =∑ni di5) / ∑(ni di4) avec ni nombre d'objets de la classe de taille ou diamètre di).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

De manière préférentielle, le taux de charge totale (noir de carbone et/ou charge inorganique telle que silice) est compris entre 40 et 200 pce, plus préférentiellement entre 40 et 150 pce et encore plus préférentiellement entre 40 et 100 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation de l'invention, la charge renforçante est du noir de carbone. On utilise avantageusement du noir de carbone dont le taux varie de 40 à 90 pce, avantageusement de 45 à 80 pce.

Selon un autre mode de réalisation de l'invention, la charge renforçante est un coupage de noir de carbone et de silice. On utilise avantageusement du noir de carbone dont le taux varie de 35 à 80 pce et une charge inorganique, en particulier de la silice, dont le taux varie de 5 à 50 pce, plus particulièrement la charge totale de la composition comprend du noir de carbone dont le taux varie de 35 à 70 pce et une charge inorganique, en particulier de la silice, dont le taux varie de 5 à 35 pce, de façon encore plus préférentielle la charge totale comprend du noir de carbone dont le taux varie de 40 à 65 pce et une charge inorganique, en particulier de la silice, dont le taux varie de 10 à 30 pce.

Avantageusement, le mélange maître ne comprend pas d'agent de couplage, même en présence d'une charge renforçante inorganique.

Avantageusement les mélanges maîtres et les compositions ainsi réalisés sont susceptibles d'être utilisés dans les applications pour pneumatique. Les compositions de caoutchouc pour pneumatique à base des mélanges maîtres et de charge renforçante selon l'invention, peuvent comporter également de façon connue un agent de recouvrement et le cas échéant un agent de couplage.

III-4) Agent antioxydant

Dans une première variante, le mélange maître obtenu à la fin de l'étape d) ne comprend pas d'agent antioxydant.

Dans une deuxième variante, le mélange maître obtenu à la fin de l'étape d) comprend un agent antioxydant et la totalité dudit agent antioxydant est introduit lors de l'étape c).

Dans cette deuxième variante, on peut utiliser en tant qu'agent antioxydant un ou plusieurs agents antioxydants. L'agent antioxydant peut être de type amine, phénol, imidazole, sel métallique de carbamate, paraphénylène diamine(s) et/ou dihydrotriméthylquinoline(s), quinine polymérisée, cire ou tout autre antioxydant utilisé usuellement dans des formulations d'élastomères. A titre d'exemple spécifique, on peut citer: N-(1,3-diméthylbutyl)-N'-phényl-p-phénylenediamine (6-PPD, commercialisée par exemple sous les marques ANTIGENE® 6C par Sumitomo Chemical Co., Ltd. NOCLAC® 6C par Ouchi Shinko Chemical Industrial Co., Ltd.), le produit "Ozonon" 6C commercialisé par Seiko Chemical Co., Ltd., la 1,2-dihydro-2,2,4-triméthyl quinoline polymérisée (TMQ, commercialisée par exemple sous la marque Agerite Resin D, par R. T. Vanderbilt), butylhydroxytoluène (BHT), et butylhydroxyanisole (BHA).

L'agent antioxydant est avantageusement une N-alkyl-N'-phényl-paraphényldiamine répondant à la formule (I) :

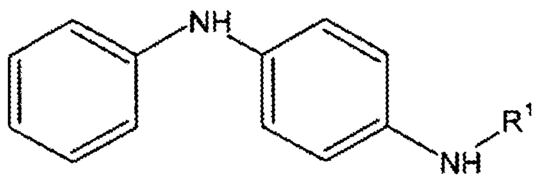

(I)

dans laquelle $R^1$ représente un groupe alkyle, linéaire ou ramifié, ayant de 1 à 12 atomes de carbone ou un groupe cycloalkyle ayant de 5 à 8 atomes de carbone.

De préférence, $R^1$ représente un alkyle ayant de 2 à 8 atomes de carbone, choisi préférentiellement dans le groupe constitué par éthyle, propyle (i.e., n-propyle, iso-propyle), butyle (i.e., n-butyle, sec-butyle et tert-butyle), pentyle, hexyle, heptyle et octyle, ou un groupe cycloalkyle ayant de 5 à 8 atomes de carbone (cyclopentyle, cyclohexyle, cycloheptyle, cyclooctyle), plus préférentiellement un groupe cyclohexyle.

On utilise plus préférentiellement des composés dont les groupes $R^1$ sont ramifiés, de formules (I-bis) ci-dessous :

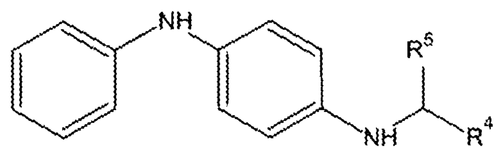

(I-bis)

dans lesquelles $R^4$, $R^5$, identiques ou différents entre eux, représentent chacun un groupe alkyle dont le nombre d'atomes de carbone est conforme aux définitions préférentielles données ci-dessus pour $R^1$.

A titre d'exemples plus préférentiels de radicaux $R^1$ ramifiés, on citera en particulier l'isopropyle, le 1,3-diméthylbutyle et le 1,4-diméthylpentyle.

Les composés de formule (I-bis) ci-dessus sont bien connus de l'homme du métier. Ils sont utilisés depuis très longue date comme agents de protection anti-vieillissement dans les compositions de caoutchouc pour pneumatiques, notamment dans les ceintures de tels pneumatiques, et appartiennent à la famille des dérivés de la paraphénylènediamine ("PPD") tels que par exemple

la N-isopropyl-N'-phényl- paraphénylènediamine ("I-PPD")

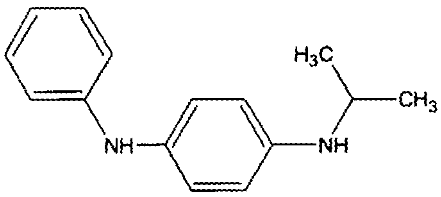

ou la N-l,3-diméthylbutyl-N'-phényl-paraphénylène- diamine ("6-PPD")

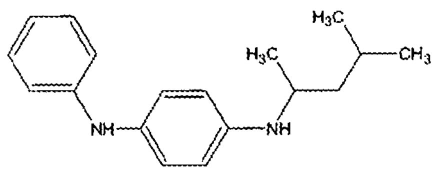

à la fois excellents antioxydants et antiozonants (voir par exemple les demandes WO 2004/033548, WO 2005/063510).

Dans cette deuxième variante, les agents antioxydants sont usuellement introduits en une quantité allant de 0,5 pce à 5 pce.

III-5) Autres additifs

Ces compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trio léates) de glycérol, les résines plastifiantes hydrocarbonées présentant une haute Tg de préférence supérieure à 30°C, et les mélanges de tels composés. On notera que l'on peut également envisager de réaliser les mélanges maîtres conformes à l'invention en y incorporant, notamment avant la phase de séchage de la réalisation du mélange maître en phase liquide, des additifs tels que décrits précédemment, huile, antioxydant, agent de couplage, agent de recouvrement...

III-6) Fabrication des compositions de caoutchouc :

L'invention a également pour objet un procédé de préparation d'une composition de caoutchouc comprenant les étapes suivantes :

A) Préparation d'un mélange maître comprenant un élastomère diénique, une charge renforçante par le procédé selon l'invention ;

B) Malaxage thermo-mécanique à haute température du mélange maître obtenu suite à l'étape A) avec les autres constituants de la composition de caoutchouc, à l'exception du système de vulcanisation ;

C) Travail mécanique à une température inférieure à la température de l'étape B) du produit issu de l'étape B) et incorporation du système de vulcanisation.

Les compositions de caoutchouc de l'invention sont fabriquées dans des mélangeurs appropriés, en utilisant deux phases de préparation successives (étapes B) et C)) selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation l'invention, tous les constituants de base des compositions de l'invention, à l'exception du système de vulcanisation, sont incorporés de manière intime, par malaxage, au cours de la première phase dite non-productive, c'est-à-dire que l'on introduit dans le mélangeur et que l'on malaxe thermomécaniquement, en une ou plusieurs étapes, au moins ces

différents constituants de base jusqu'à atteindre la température maximale comprise entre 130°C et 200°C, de préférence comprise entre 145°C et 185°C.

Selon un mode de réalisation préférentiel de l'invention, les constituants de base des compositions de l'invention, à l'exception du système de vulcanisation, sont incorporés à l'élastomère diénique et à la charge renforçante qui ont été préalablement préparés sous forme d'un premier mélange maître. Lorsque le mélange maître ne comprend pas d'agent antioxydant, un tel agent est ajouté lors de cette étape B).

Ce premier mélange maître est réalisé en phase « liquide ». Pour ce faire, on a fait appel à l'élastomère diénique sous forme de latex qui se présente sous forme de particules d'élastomère dispersées dans l'eau, et à une dispersion aqueuse du noir de carbone, c'est-à-dire une charge dispersée dans de l'eau, couramment appelée « slurry ». Plus préférentiellement encore on suivra les étapes de procédé décrites dans le document US 6 048 923, qui consiste notamment à incorporer un flux continu d'un premier fluide constitué par le latex d'élastomère dans la zone de mélangeage d'un réacteur de coagulation, à incorporer un deuxième flux continu d'un deuxième fluide constitué par la dispersion aqueuse de noir de carbone sous pression dans la zone de mélangeage pour former un mélange avec le latex d'élastomère ; le mélangeage de ces deux fluides étant suffisamment énergétique pour permettre de coaguler quasiment complètement le latex d'élastomère avec le noir de carbone avant l'orifice de sortie du réacteur de coagulation puis à sécher le coagulum obtenu selon le procédé de l'invention.

Selon un autre mode de réalisation préférentiel de l'invention, une charge inorganique et un deuxième élastomère sont incorporés au premier mélange maître en se présentant également sous forme d'un deuxième mélange maître qui aura été préalablement préparé. Ce deuxième mélange maître peut être préparé en particulier sous forme solide par malaxage thermomécanique du deuxième élastomère et de la charge inorganique ; il peut également être préparé par tout autre procédé et notamment il peut être également préparé en phase liquide.

On notera en particulier que dans le cas de l'incorporation d'un deuxième élastomère et/ou d'une charge inorganique, cette ou ces incorporations peuvent être réalisées simultanément à l'introduction dans le mélangeur des autres constituants (notamment le premier élastomère diénique ou premier mélange maître) mais également avantageusement que cette ou ces incorporations peuvent être décalées dans le temps de quelques dizaines de secondes à quelques minutes.

On notera que dans le cas d'un ajout d'une charge inorganique et d'un deuxième élastomère, ceux-ci peuvent être introduits séparément ou sous la forme d'un deuxième mélange maître contenant le deuxième élastomère et la charge inorganique. Dans le cas de l'introduction du deuxième élastomère seul et de la charge inorganique seule, décalée dans le temps de quelques dizaines de secondes à quelques minutes, la charge inorganique peut être introduite avant, après ou simultanément au deuxième élastomère.

A titre d'exemple, la première phase (non-productive) est conduite en une seule étape thermomécanique au cours de laquelle on introduit, dans un mélangeur approprié tel qu'un mélangeur interne usuel, tous les constituants nécessaires (sous forme le cas échéant de mélanges maîtres comme on l'a précisé précédemment), les éventuels agents de recouvrement ou de mise en œuvre complémentaires et autres additifs divers, en particulier l'agent antioxydant lorsque le mélange maître n'en comprend pas, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 pce et 12 pce, en particulier entre 1 pce et 10 pce. L'accélérateur primaire de vulcanisation est utilisé à un taux préférentiel compris entre 0,5 pce et 10 pce, plus préférentiellement compris entre 0,5 pce et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au

laboratoire, ou encore extrudée sous la forme d'un profilé de caoutchouc utilisable par exemple comme une bande de roulement de pneumatique pour véhicule de tourisme, poids-lourds etc.

On notera qu'une telle composition peut constituer avantageusement la totalité de la bande de roulement. Mais l'invention s'applique également aux cas où ces compositions de caoutchouc forment une partie seulement d'une bande de roulement composite constituée par exemple de deux couches radialement superposées de formulations différentes (structure dite "cap-base"), toutes deux destinées à entrer en contact avec la route lors du roulage du pneumatique, au cours de la vie de ce dernier. La partie à base de compositions conformes à l'invention, pourra alors constituer la couche radialement externe de la bande de roulement destinée à entrer en contact avec le sol dès le début du roulage du pneumatique neuf, ou au contraire sa couche radialement interne destinée à entrer en contact avec le sol ultérieurement.

## IV EXEMPLES DE REALISATION DE L'INVENTION

La plasticité Mooney est exprimée en "unité Mooney" (UM, avec 1 UM = 0,83 Newton.mètre).

Exemple 1

IV-1.1 Préparation de mélange- maître de caoutchouc naturel et de noir de carbone

Les coagulum de caoutchouc naturel (100 pce) et de noir de carbone (72 pce) présentant une très bonne note de dispersion de la charge dans la matrice élastomérique sont réalisés en phase liquide selon le procédé décrit dans le brevet U.S. Patent No 6,048,923.

Ils sont ensuite séchés selon les procédés suivants :

Mélange maître MI (non conforme à l'invention) :

A la sortie de l'essoreuse, des pellets à un débit de 700kg/h produit sec et chargés de 15% en matières volatiles (essentiellement de l'eau) sont envoyés au FCM. Le 6-PPD est injecté à l'entrée du FCM à un taux de 1,2 pce. A la sortie du FCM, le mélange appelé chunk sort à 165°C et un taux de matière volatile compris entre 1 et 3%. La viscosité Mooney mesurée pour ce composite (MS) est ≥ 200 et de ce fait n'est pas mesurable par la machine (overtorque). Juste à la sortie du FCM, uniquement la moitié de la production (350kg/h) est envoyée à l'outil à cylindre (Roll Mill), l'autre moitié est jetée. A la sortie de l'outil à cylindre (Roll Mill), le composite a une température autour de 155°C, une viscosité Mooney de 150-170 en moyenne et un taux de matières volatiles <1%, généralement autour de 0,4%. Ce composite sortie RM, appelé strip, est ensuite envoyé vers la fin de ligne.

Mélange maître M2A (conforme à l'invention) :

A la sortie de l'essoreuse, des pellets à un débit de 750kg/h produit sec et chargés de 15% en matières volatiles (essentiellement de l'eau) sont envoyés au FCM. Avec cette recette, il n'y a pas d'injection du 6-PPD au FCM. A la sortie du FCM, le mélange appelé chunk sort à 165°C et un taux de matière volatile compris entre 1 et 3%. La viscosité Mooney mesurée pour ce composité (MS) est > 200 et de ce fait n'est pas mesurable par la machine (overtorque). A la sortie du FCM, la totalité de la production (750kg/h) est envoyée à l'outil à cylindre (Roll Mill). A la sortie de l'outil à cylindre (Roll Mill), le composite a une température autour de 155°C, une viscosité Mooney comprise entre 125 et 145 et un taux de matières volatiles <1%, généralement autour de 0.4%. Ce composite appelé strip est ensuite envoyé au prebreaker où il est mélangé avec 1,2 pce de 6-PPD. A la sortie de prebreaker le composite est envoyé vers la fin de ligne.

Mélange maître M2B (conforme à l'invention) :

A la sortie de l'essoreuse, des pellets à un débit de 750kg/h produit sec et chargés de 15% en matières volatiles (essentiellement de l'eau) sont envoyés au FCM. Avec cette recette, il n'y a pas d'injection du 6-PPD au FCM. A la sortie du FCM, le mélange appelé chunk sort à 165°C et un taux de matière volatile compris entre 1 et 3%. La viscosité Mooney mesurée pour ce composité (MS) est > 200 et de ce fait n'est pas mesurable par la machine (overtorque). A la sortie du FCM, la totalité de la production (750kg/h) est envoyée à l'outil à cylindre (Roll Mill). A la sortie de l'outil à cylindre (Roll Mill), le composite a une température autour de 155°C, une viscosité Mooney comprise entre 125 et 140 et un taux de matières volatiles <1%, généralement autour de 0.4%. Ce composite appelé strip est ensuite envoyé directement vers la fin de ligne. Avec cette recette, il n'y a pas d'injection de 6-PPD ou d'autre agent antioxydant dans ce mélange maître.

IV-1.2 Préparation des compositions de caoutchouc

Les différentes compositions ont été réalisées à partir du mélange maître MI, M2A ou M2B. On procède pour les essais qui suivent de la manière suivante: on introduit dans un mélangeur interne, rempli à 70% et dont la température initiale de cuve est d'environ 60°C, le mélange maître MI, M2A ou M2B et les autres composants sauf le système de vulcanisation. On conduit alors un travail thermomécanique (phase non-productive) en une étape (durée totale du malaxage égale à environ 5 min), jusqu'à atteindre une température maximale de "tombée" d'environ 165°C.

On récupère le mélange ainsi obtenu, on le refroidit puis on ajoute le système de vulcanisation (soufre et accélérateur sulfénamide) sur un mélangeur externe

à 70°C, en mélangeant le tout (phase productive) pendant environ 5 à 6 min. Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

IV-1.3 Propriétés mécaniques

Cet exemple a pour but de mettre en évidence que les propriétés d'une composition de caoutchouc obtenue avec un mélange maître conforme à l'invention présente les mêmes propriétés mécaniques qu'un mélange maître obtenu par un procédé classique.

La composition C1, non-conforme à l'invention, est préparée à partir d'un mélange maître M1 selon le procédé détaillé dans paragraphe IV-1.2, avec ajout de 0,8 pce d'agent antioxydant.

La composition C2A conforme à l'invention est préparée à partir d'un mélange maître M2A selon le procédé détaillé dans paragraphe IV-1.2, avec ajout de 0,8 pce d'agent antioxydant.

La composition C2B conforme à l'invention est préparée à partir d'un mélange maître M2B selon le procédé détaillé dans paragraphe IV-1.2. Au cours de ce procédé, on a introduit l'agent antioxydant (2pce).

L'ensemble des compositions présente la formulation de base suivante (en pce) :

Tableau 1

| | C1; C2A; C2B |
|---|---|
| caoutchouc naturel | 100 |
| noir de carbone N234 | 72 |
| 6-PPD (1) | 2 |
| Acide stéarique | 1,5 |
| ZnO (2) | 2,5 |
| Soufre | 1,1 |
| CBS (3) | 1,1 |

(1) 6-PPD : N-(1,3-diméthylbutyl)-N'-phenyl-p-phenylènediamine: antioxydant
(2) ZnO : Oxyde de Zinc
(3) N-cyclohexyl-2-benzothiazyl-sulfénamide (« Santocure CBS » de la société Flexsys)

Les propriétés mesurées après cuisson à 130°C pendant 60 minutes sont données dans le tableau 2 qui suit.

Tableau 2

| | C1 | C2A | C2B |
|---|---|---|---|
| MA300/MA100 | 1,5 | 1,6 | 1,6 |
| MFTR (k cycles) | 78,6 | 81,8 | 81,8 |
| G* (MPa) | 1,7 | 1,6 | 1,6 |
| Tan(δ)max | 0,22 | 0,21 | 0,21 |

Les produits C1 et C2A, C2B présentent les mêmes propriétés mécaniques.

Exemple 2

IV.1.4 Préparation de mélange- maître de caoutchouc naturel et de noir de carbone

Les coagulum de caoutchouc naturel (100 pce) et de noir de carbone (50 pce) présentant une très bonne note de dispersion de la charge dans la matrice élastomérique sont réalisés en phase liquide selon le procédé décrit dans le brevet U.S. Patent No 6,048,923.

Ils sont ensuite séchés selon les procédés suivants :

Mélange maître M3 (non conforme à l'invention) :

A la sortie de l'essoreuse, des pellets à un débit de 1000kg/h produit sec et chargés de 15% en matières volatiles (essentiellement de l'eau) sont envoyés au FCM. Le 6-PPD est injecté à l'entrée du FCM à un taux de 1,2 pce. A la sortie du FCM, le mélange appelé chunk sort à 160°C et un taux de matière volatile compris entre 1 et 3%. La viscosité Mooney mesurée pour ce composite (MS) est comprise entre 95 et 115. A la sortie du FCM, la totalité de la production (1000kg/h) est envoyée à l'outil à cylindre (Roll Mill). A la sortie de l'outil à cylindre (Roll Mill), le composite a une température autour de 155°C, une viscosité Mooney de 85-95 en moyenne et un taux de matières volatiles <1%, généralement autour de 0,4%. Ce composite sortie RM, appelé strip, est ensuite envoyé vers la fin de ligne.

Mélange maître M4A (conforme à l'invention) :

A la sortie de l'essoreuse, des pellets à un débit de 1000kg/h produit sec et chargés de 15% en matières volatiles (essentiellement de l'eau) sont envoyés au FCM. Avec cette recette, il n'y a pas d'injection du 6-PPD au FCM. A la sortie du FCM, le mélange appelé chunk sort à 165°C et un taux de matière volatile compris entre 1 et 3%. La viscosité Mooney mesurée pour ce composité (MS) est comprise entre 95 et 115. A la sortie du FCM, la totalité de la production (1000kg/h) est envoyée à l'outil à cylindre (Roll Mill). A la sortie de l'outil à cylindre (Roll Mill), le composite a une température autour de 155°C, une viscosité Mooney comprise entre 55 et 65 et un taux

de matières volatiles <1%, généralement autour de 0.4%. Ce composite appelé strip est ensuite envoyé au prebreaker où il est mélangé avec 1 pce de 6-PPD. A la sortie de prebreaker le composite est envoyé vers la fin de ligne.

Mélange maître M4B (conforme à l'invention) :

A la sortie de l'essoreuse, des pellets à un débit de 1000kg/h produit sec et chargés de 15% en matières volatiles (essentiellement de l'eau) sont envoyés au FCM. Avec cette recette, il n'y a pas d'injection du 6-PPD au FCM. A la sortie du FCM, le mélange appelé chunk sort à 165°C et un taux de matière volatile compris entre 1 et 3%. La viscosité Mooney mesurée pour ce composité (MS) est comprise entre 95 et 115. A la sortie du FCM, la totalité de la production (1000kg/h) est envoyée à l'outil à cylindre (Roll Mill). A la sortie de l'outil à cylindre (Roll Mill), le composite a une température autour de 155°C, une viscosité Mooney comprise entre 55 et 65 et un taux de matières volatiles <1%, généralement autour de 0.4%. Ce composite appelé strip est ensuite envoyé directement vers la fin de ligne. Avec cette recette, il n'y a pas d'injection de 6-PPD ou d'autre agent antioxydant dans ce mélange maître.

IV-1.5 Préparation des compositions de caoutchouc

Les différentes compositions ont été réalisées à partir du mélange maître M3, M4A et M4B. On procède pour les essais qui suivent de la manière suivante: on introduit dans un mélangeur interne, rempli à 70% et dont la température initiale de cuve est d'environ 60°C, le mélange maître M3, M4A ou M4B, et les autres composants sauf le système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute le système de vulcanisation (soufre et accélérateur sulfénamide) sur un mélangeur externe à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

IV-1.6 Propriétés mécaniques

Cet exemple a pour but de mettre en évidence que les propriétés d'une composition de caoutchouc obtenue avec un mélange maître conforme à l'invention présente les mêmes propriétés mécaniques qu'un mélange maître obtenu par un procédé classique.

La composition C3, non-conforme à l'invention, est préparée à partir d'un mélange maître M3 selon le procédé détaillé dans paragraphe IV-1.5, avec ajout de 0,8 pce d'agent antioxydant.

La composition C4A conforme à l'invention est préparée à partir d'un mélange maître M4 selon le procédé détaillé dans paragraphe IV-1.5, avec ajout de 1 pce d'agent antioxydant.

La composition C4B conforme à l'invention est préparée à partir d'un mélange maître M4B selon le procédé détaillé dans paragraphe IV-1.5. Au cours de ce procédé, on a introduit l'agent antioxydant (2 pce).

L'ensemble des compositions présente la formulation de base suivante (en pce) :

Tableau 3

| | |
|---|---|
| caoutchouc naturel | 100 |
| noir de carbone N234 | 50 |
| 6-PPD (1) | 2 |
| Acide stéarique | 2,5 |
| ZnO (2) | 2,7 |
| Soufre | 1,7 |
| CBS (3) | 0,75 |

(1) 6-PPD : N-(1,3-diméthylbutyl)-N'-phenyl-p-phenylènediamine: antioxydant
(2) ZnO : Oxyde de Zinc
(3) N-cyclohexyl-2-benzothiazyl-sulfénamide (« Santocure CBS » de la société Flexsys)

Les propriétés mesurées après cuisson à 150°C pendant 40 minutes sont données dans le tableau 4 qui suit.

Tableau 4

| | C3 | C4A | C4B |
|---|---|---|---|
| MA300/MA100 | 1,48 | 1,53 | 1,53 |
| MFTR (k cycles) | 162 | 183 | 183 |
| G* (MPa) | 1,32 | 1,27 | 1,27 |
| Tan(δ)max | 0,12 | 0,12 | 0,12 |

Les produits C3, et C4A, C4B présentent les mêmes propriétés mécaniques.

Par la suppression de l'injection du 6-PPD au FCM (Farrel Continuous Mixer) à l'amont du Roll Mill on:

- Baisse la viscosité Mooney du composite,
- Augmente le débit,

et ceci sans dégrader les propriétés du composite en

mélange.

Le fait de stopper l'injection du 6-PPD au FCM permet d'améliorer notablement la cohésion du composite sur le Roll Mill, de baisser rapidement sa viscosité Mooney et d'augmenter le débit de production (pour l'exemple de 72 pce en noir de carbone l'augmentation du débit est de 100% ; elle est de plus de 30% pour l'exemple de 50 pce en noir de carbone).

## Revendications

1. Procédé de préparation d'un mélange maître, comprenant un élastomère diénique et une charge renforçante, et présentant une dispersion de la charge renforçante dans la matrice élastomérique ayant une note Z supérieure ou égale à 80, l'élastomère diénique comprend au moins du caoutchouc naturel, le procédé comprend les étapes successives suivantes :

   a) Introduire, pour obtenir un mélange maître sous forme de masse séchée, un coagulum dans au moins un mélangeur continu chauffé, ledit coagulum comprend ledit élastomère diénique et ladite charge renforçante dispersée avec une note Z supérieure ou égale à 80 dans la masse séchée ;
   b) Faire passer la masse sortant du mélangeur continu dans un outil à cylindre pour obtenir un mélange maître sous forme de ruban ; puis
   c) Eventuellement, introduire le ruban en sortie de l'outil à cylindre et un agent antioxydant dans un mélangeur continu de sorte à obtenir un mélange maître comprenant un agent antioxydant;
   d) Récupérer suite à l'étape b) ou c) ledit mélange maître ayant un taux d'humidité inférieur à 1% en poids
   **caractérisé en ce que** les débits des étapes a) et b) sont supérieurs à 500 kg/h,
   et **en ce que** lorsqu'un agent antioxydant est présent dans le mélange maître obtenu à la fin de l'étape d), la totalité dudit agent antioxydant est introduit lors de l'étape c).

2. Procédé selon la revendication 1, **caractérisé en ce que** l'étape c) est omise et le mélange maître obtenu à la fin de l'étape d) ne comprend pas d'agent antioxydant.

3. Procédé selon la revendication 1, **caractérisé en ce que** l'étape c) est réalisée, le mélange maître obtenu à la fin de l'étape d) comprend un agent antioxydant et **en ce que** la totalité dudit agent antioxydant est introduit lors de l'étape c).

4. Procédé selon la revendication 3, **caractérisé en ce que** l'agent antioxydant est une N-alkyl-N'-phénylparaphényldiamine répondant à la formule (I) :

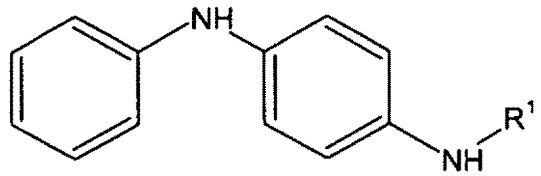

(I)

dans laquelle $R^1$ représente un groupe alkyle, linéaire ou ramifié, ayant de 1 à 12 atomes de carbone ou un groupe cycloalkyle ayant de 5 à 8 atomes de carbone.

5. Procédé l'une quelconque des revendications précédentes, **caractérisé en ce que** la totalité de la masse sortant du mélangeur continu de l'étape a) est envoyé à l'outil à cylindre de l'étape b).

6. Procédé selon l'une quelconque des revendications précédentes, **caractérisé en ce que** les débits des étapes a) et b) sont identiques.

7. Procédé selon l'une quelconque des revendications précédentes, **caractérisé en ce que** préalablement à l'étape a) le coagulum est obtenu par mélangeage en phase liquide à partir d'un latex de l'élastomère diénique et d'une dispersion aqueuse de la charge renforçante.

8. Procédé selon la revendication 7, **caractérisé en ce que** le coagulum est obtenu selon les étapes suivantes :

   - Alimenter un flux continu du latex de l'élastomère diénique jusqu'à une zone de mélange d'un réacteur de coagulation définissant une zone allongée de coagulation s'étendant entre la zone de mélange et une sortie,
   - Alimenter un flux continu d'un fluide comprenant une charge renforçante sous pression dans la zone de mélange d'un réacteur de coagulation pour former un mélange coagulé,
   - Essorer le coagulum obtenu précédemment afin de récupérer le coagulum essoré de l'étape a).

9. Procédé selon l'une quelconque des revendications précédentes, **caractérisé en ce que** lors de l'étape a) le mélangeur continu est un FCM.

10. Procédé selon l'une quelconque des revendications précédentes, **caractérisé en ce qu'**en sortie du mélangeur continu de l'étape a) la masse a un taux de matière volatile inférieur à 5% en poids.

**11.** Procédé selon l'une quelconque des revendications précédentes, **caractérisé en ce qu'**en sortie de l'étape b) le ruban a un taux de matière volatile inférieur à 1% en poids.

**12.** Procédé selon l'une quelconque des revendications précédentes, **caractérisé en ce que** la charge renforçante est une charge organique renforçante, en particulier du noir de carbone.

**13.** Procédé selon la revendication 12, **caractérisé en ce que** le taux de noir de carbone est compris entre 40 et 90 pce, de préférence entre 45 et 80 pce.

**14.** Procédé selon l'une quelconque des revendications précédentes, **caractérisé en ce que** l'élastomère diénique est un caoutchouc naturel.

**15.** Procédé de préparation d'une composition de caoutchouc comprenant les étapes suivantes :

(A) Préparation d'un mélange maître comprenant un élastomère diénique, une charge renforçante par le procédé selon l'une quelconque des revendications précédentes ;
(B) Malaxage thermo-mécanique à haute température du mélange maître obtenu suite à l'étape (A) avec les autres constituants de la composition de caoutchouc, à l'exception du système de vulcanisation ;
(C) travail mécanique à une température inférieure à la température de l'étape (B) du produit issu de l'étape (B) et incorporation du système de vulcanisation.

## Patentansprüche

**1.** Verfahren zur Herstellung eines Masterbatches, das ein Dienelastomer und einen verstärkenden Füllstoff umfasst und eine Dispersion des verstärkenden Füllstoffs in der Elastomermatrix aufweist, die einen Z-Wert von größer gleich 80 aufweist, wobei das Dienelastomer zumindest Naturkautschuk umfasst, wobei das Verfahren folgende aufeinanderfolgende Schritte umfasst:

a) zum Erhalten eines Masterbatches in Form einer getrockneten Masse Einbringen eines Koagulats in mindestens einen erwärmten Durchlaufmischer, wobei das Koagulat das Dienelastomer und den dispergierten verstärkenden Füllstoff mit einem Z-Wert größer gleich 80 in der getrockneten Masse umfasst;
b) Leiten der Masse, die den Durchlaufmischer verlässt, in ein Walzwerk, um ein Masterbatch in Streifenform zu erhalten, anschließend
c) gegebenenfalls Einbringen des Streifens am Auslass des Walzwerks und eines Antioxidationsmittels in einen Durchlaufmischer, damit ein Masterbatch erhalten wird, das ein Antioxidationsmittel umfasst;
d) im Anschluss an Schritt b) oder c) Gewinnen des Masterbatches mit einem Feuchtigkeitsgehalt von unter 1 Gewichts-%,
**dadurch gekennzeichnet, dass** der Durchsatz in Schritt a) und b) über 500 kg/h beträgt,
und dadurch, dass, wenn ein Antioxidationsmittel in dem Masterbatch vorhanden ist, das am Ende von Schritt d) erhalten wird, das gesamte Antioxidationsmittel während Schritt c) eingebracht wird.

**2.** Verfahren nach Anspruch 1, **dadurch gekennzeichnet, dass** Schritt c) entfällt und das Masterbatch, das am Ende von Schritt d) erhalten wird, kein Antioxidationsmittel umfasst.

**3.** Verfahren nach Anspruch 1, **dadurch gekennzeichnet, dass** Schritt c) durchgeführt wird, das Masterbatch, das am Ende von Schritt d) erhalten wird, ein Antioxidationsmittel umfasst, und dadurch, dass das gesamte Antioxidationsmittel während Schritt c) eingebracht wird.

**4.** Verfahren nach Anspruch 3, **dadurch gekennzeichnet, dass** das Antioxidationsmittel ein N-Alkyl-N'-phenyl-paraphenyldiamin ist, das Formel (I) entspricht:

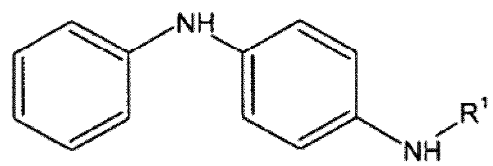

(I)

wobei $R^1$ eine lineare oder verzweigte Alkylgruppe mit 1 bis 12 Kohlenstoffatomen oder eine Cycloalkylgruppe mit 5 bis 8 Kohlenstoffatomen darstellt.

**5.** Verfahren nach einem der vorhergehenden Ansprüche, **dadurch gekennzeichnet, dass** die gesamte Masse, die den Durchlaufmischer von Schritt a) verlässt, dem Walzwerk von Schritt b) zugeführt wird.

**6.** Verfahren nach einem der vorhergehenden Ansprüche, **dadurch gekennzeichnet, dass** der Durchsatz von Schritt a) und b) identisch ist.

**7.** Verfahren nach einem der vorhergehenden Ansprüche, **dadurch gekennzeichnet, dass** das Koagulat vor Schritt a) durch Mischen in flüssiger Phase ausgehend von einem Dienelastomer-Latex und einer

wässrigen Dispersion des verstärkenden Füllstoffs erhalten wird.

**8.** Verfahren nach Anspruch 7, **dadurch gekennzeichnet, dass** das Koagulat gemäß folgenden Schritten erhalten wird:

- Speisen eines kontinuierlichen Stroms des Dienelastomer-Latex bis zu einem Mischbereich eines Koagulationsreaktors, der einen länglichen Koagulationsbereich definiert, der sich zwischen dem Mischbereich und einem Auslass erstreckt,
- Speisen eines kontinuierlichen Stroms einer Flüssigkeit, die einen verstärkenden Füllstoff umfasst, unter Druck in den Mischbereich eines Koagulationsreaktors zur Bildung eines koagulierten Gemischs,
- Entwässern des zuvor erhaltenen Koagulats, um das entwässerte Koagulat von Schritt a) zu erhalten.

**9.** Verfahren nach einem der vorhergehenden Ansprüche, **dadurch gekennzeichnet, dass** der Durchlaufmischer bei Schritt a) ein FCM ist.

**10.** Verfahren nach einem der vorhergehenden Ansprüche, **dadurch gekennzeichnet, dass** die Masse am Auslass des Durchlaufmischers von Schritt a) einen Gehalt an flüchtigen Bestandteilen von unter 5 Gewichts-% aufweist.

**11.** Verfahren nach einem der vorhergehenden Ansprüche, **dadurch gekennzeichnet, dass** der Streifen beim Verlassen von Schritt b) einen Gehalt an flüchtigen Bestandteilen von unter 1 Gewichts-% aufweist.

**12.** Verfahren nach einem der vorhergehenden Ansprüche, **dadurch gekennzeichnet, dass** der verstärkende Füllstoff ein organischer verstärkender Füllstoff ist, insbesondere Ruß.

**13.** Verfahren nach Anspruch 12, **dadurch gekennzeichnet, dass** der Gehalt an Ruß zwischen 40 und 90 phr, vorzugsweise zwischen 45 und 80 phr liegt.

**14.** Verfahren nach einem der vorhergehenden Ansprüche, **dadurch gekennzeichnet, dass** das Dienelastomer ein Naturkautschuk ist.

**15.** Verfahren zur Herstellung einer Kautschukzusammensetzung, das folgende Schritte umfasst:

(A) Herstellen eines Masterbatches, das ein Dienelastomer und einen verstärkenden Füllstoff umfasst, mit dem Verfahren nach einem der vorhergehenden Ansprüche;
(B) thermomechanisches Durchmischen des im Anschluss an Schritt (A) erhaltenen Masterbatches mit den anderen Bestandteilen der Kautschukzusammensetzung, mit Ausnahme des Vulkanisiersystems, bei hoher Temperatur;
(C) mechanisches Bearbeiten des Produkts aus Schritt (B) bei einer Temperatur unter der Temperatur von Schritt (B) und Einarbeiten des Vulkanisiersystems.

## Claims

**1.** Process for preparing a masterbatch, comprising a diene elastomer and a reinforcing filler, and having a dispersion of the reinforcing filler in the elastomer matrix that has a Z value greater than or equal to 80, the diene elastomer comprises at least natural rubber, the process comprises the following successive steps:

a) introducing, in order to obtain a masterbatch in the form of dried mass, a coagulum into at least one heated continuous mixer, said coagulum comprises said diene elastomer and said reinforcing filler dispersed, with a Z value greater than or equal to 80, in the dried mass;
b) passing the mass leaving the continuous mixer into a roll mill in order to obtain a masterbatch in strip form; then
c) optionally, introducing the strip leaving the roll mill and an antioxidant into a continuous mixer so as to obtain a masterbatch comprising an antioxidant;
d) recovering, following step b) or c), said masterbatch having a moisture content of less than 1% by weight,
**characterized in that** the throughputs of steps a) and b) are greater than 500 kg/h,
and **in that** when an antioxidant is present in the masterbatch obtained at the end of step d), the whole of said antioxidant is introduced during step c).

**2.** Process according to Claim 1, **characterized in that** step c) is omitted and the masterbatch obtained at the end of step d) does not comprise antioxidant.

**3.** Process according to Claim 1, **characterized in that** step c) is carried out, the masterbatch obtained at the end of step d) comprises an antioxidant and **in that** the whole of said antioxidant is introduced during step c).

**4.** Process according to Claim 3, **characterized in that** the antioxidant is an N-alkyl-N'-phenyl-para-phenyldiamine corresponding to the formula (I):

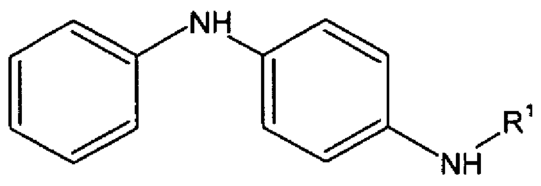

(I)

in which $R^1$ represents a linear or branched alkyl group having from 1 to 12 carbon atoms or a cycloalkyl group having from 5 to 8 carbon atoms.

**5.** Process any one of the preceding claims, **characterized in that** the whole of the mass leaving the continuous mixer of step a) is sent to the roll mill of step b).

**6.** Process according to any one of the preceding claims, **characterized in that** the throughputs of steps a) and b) are identical.

**7.** Process according to any one of the preceding claims, **characterized in that** prior to step a) the coagulum is obtained by liquid-phase mixing starting from a latex of the diene elastomer and an aqueous dispersion of the reinforcing filler.

**8.** Process according to Claim 7, **characterized in that** the coagulum is obtained according to the following steps:

- feeding a continuous flow of the diene elastomer latex to a mixing region of a coagulation reactor defining an elongated coagulation region extending between the mixing region and an outlet,
- feeding a continuous flow of a fluid comprising a reinforcing filler under pressure to the mixing region of a coagulation reactor in order to form a coagulated mixture,
- dewatering the coagulum obtained previously in order to recover the dewatered coagulum of step a).

**9.** Process according to any one of the preceding claims, **characterized in that** during step a) the continuous mixer is an FCM.

**10.** Process according to any one of the preceding claims, **characterized in that** on leaving the continuous mixer of step a) the mass has a content of volatile matter of less than 5% by weight.

**11.** Process according to any one of the preceding claims, **characterized in that** on leaving step b) the strip has a content of volatile matter of less than 1% by weight.

**12.** Process according to any one of the preceding claims, **characterized in that** the reinforcing filler is a reinforcing organic filler, in particular carbon black.

**13.** Process according to Claim 12, **characterized in that** the content of carbon black is between 40 and 90 phr, preferably between 45 and 80 phr.

**14.** Process according to any one of the preceding claims, **characterized in that** the diene elastomer is a natural rubber.

**15.** Process for preparing a rubber composition comprising the following steps:

(A) preparing a masterbatch, comprising a diene elastomer and a reinforcing filler by the process according to any one of the preceding claims;
(B) high-temperature thermomechanical kneading of the masterbatch obtained following step (A) with the other constituents of the rubber composition, except for the vulcanization system;
(C) mechanical working, at a temperature below the temperature of step (B), of the product resulting from step (B) and incorporation of the vulcanization system.

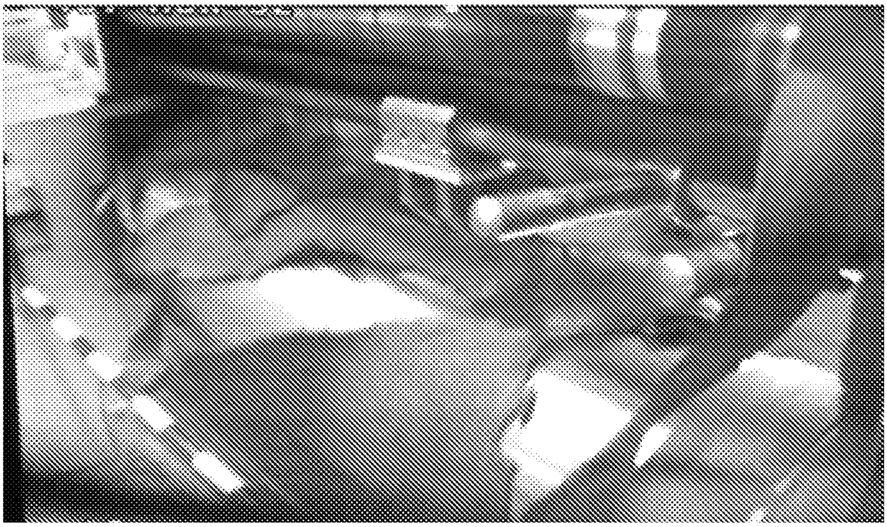

Fig. 1

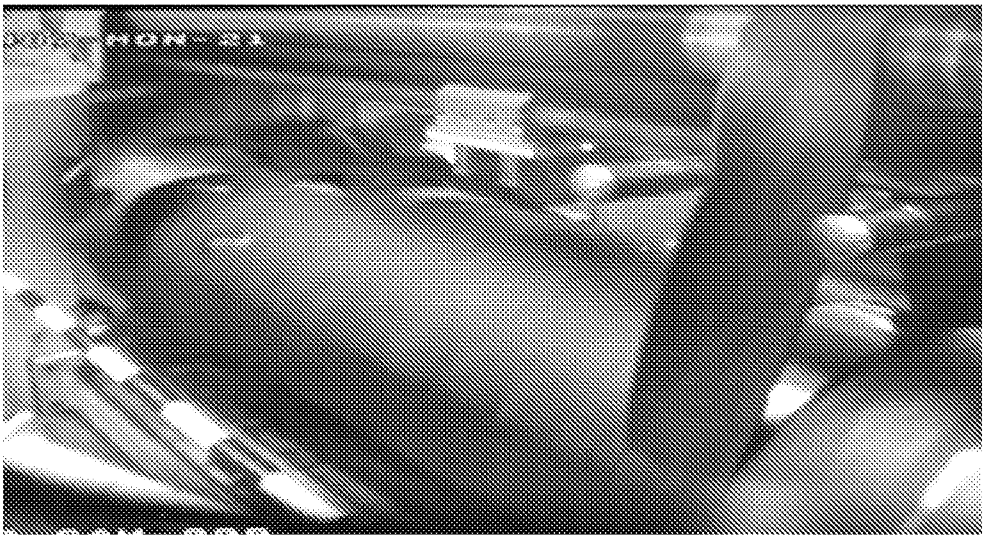

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6048923 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 03016387 A
- WO 03002648 A
- US 2005016651 A
- WO 03002649 A
- US 2005016650 A
- WO 2004033548 A
- WO 2005063510 A
- WO 0210269 A


### Littérature non-brevet citée dans la description


- **S. OTTO et al.** *Kautschuk Gummi Kunststoffe*
- Latex concentrates : properties and composition. **DE K.F. GASELEY ; A.D.T. GORDON ; T.D. PENDLE.** Naturel Rubber Science and Technology. Oxford University Press, 1988
- **C. W. CARR ; 1. M. KOLTHOFF ; E. J. MEEHAN.** Journal of Polymer Science. University of Minesota, 1950, vol. V, 201-206
- JOURNAL OF POLYMER SCIENCE. 1951, vol. VI, 73-81
- **E. J. VANDENBERG ; G. E. HULSE.** ½ Industrial and Engineering Chemistry. Hercules Powder Company, 1948, vol. 5 40, 932-937
- **J. R. MILLER ; H. E. DIEM ; B. F. GOODRICH.** ½ Industrial and Engineering Chemistry. Chemical Co, 1954, vol. 46, 1065-1073